(19) **Europäisches Patentamt / European Patent Office / Office européen des brevets**

(11) **EP 3 248 990 B1**

(12) **EUROPEAN PATENT SPECIFICATION**

(45) Date of publication and mention
of the grant of the patent:
**15.01.2020 Bulletin 2020/03**

(21) Application number: **16811803.2**

(22) Date of filing: **15.04.2016**

(51) Int Cl.:
*C08F 2/10* (2006.01)     *C08F 20/00* (2006.01)
*C08J 3/075* (2006.01)     *C08J 3/24* (2006.01)
*C08K 5/00* (2006.01)     *C08K 3/00* (2018.01)

(86) International application number:
**PCT/KR2016/003948**

(87) International publication number:
**WO 2016/204390 (22.12.2016 Gazette 2016/51)**

(54) **METHOD FOR MANUFACTURING SUPER ABSORBENT RESIN**

VERFAHREN ZUR HERSTELLUNG EINES SUPERSAUGFÄHIGEN HARZES

PROCÉDÉ DE FABRICATION D'UNE RÉSINE SUPERABSORBANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2015 KR 20150085867**

(43) Date of publication of application:
**29.11.2017 Bulletin 2017/48**

(73) Proprietor: **LG Chem, Ltd.
Seoul 07336 (KR)**

(72) Inventors:
- **NAM, Hye Mi
  Daejeon 34122 (KR)**
- **LEE, Sang Gi
  Daejeon 34122 (KR)**
- **LEE, Soo Jin
  Daejeon 34122 (KR)**
- **JANG, Tae Hwan
  Daejeon 34122 (KR)**

- **HWANG, Min Ho
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
JP-A- H10 139 916     JP-A- 2014 514 128
JP-A- 2014 514 432     JP-A- 2014 523 452
KR-A- 20140 094 536    US-A- 5 328 935
US-A1- 2008 215 026    US-A1- 2014 312 273

Remarks:
The file contains technical information submitted after the application was filed and not included in this specification

**Description**

[Technical Field]

The present invention relates to a method of preparing a superabsorbent polymer with a high absorption rate.

[Background Art]

A superabsorbent polymer (SAP) is a synthetic polymeric material capable of absorbing moisture from about 500 to 1000 times its own weight. Various manufacturers have denominated it as different names, such as SAM (Super Absorbency Material), AGM (Absorbent Gel Material), etc. Since such superabsorbent polymers started to be practically applied in sanitary products, now they have been widely used not only for hygiene products such as disposable diapers for children, sanitary napkins, etc., but also for water retaining soil products for gardening, water stop materials for the civil engineering and construction, sheets for raising seedling, fresh-keeping agents for food distribution fields, materials for poultice, etc.

In most cases, these superabsorbent polymers have been widely used in the field of hygienic materials such as diapers, sanitary napkins, etc. For these applications, the superabsorbent polymers are required to exhibit a high absorption rate with respect to moisture, etc., and also to exhibit an absorption rate above a predetermined level even under an external pressure or in a partially swollen state.

Therefore, in order to improve the absorption rate of superabsorbent polymers, studies have been continued on a technology of increasing the absorption surface area of superabsorbent polymers.

As a method of improving the absorption rate by increasing the absorption surface area of superabsorbent polymers, a method of forming many pores inside the superabsorbent polymer to rapidly absorb water or a method of preparing the superabsorbent polymer as small particles to improve a contact surface area with water may be considered.

As the former method, a method of preparing a superabsorbent polymer by using a foaming agent, etc. was suggested, but bubbles generated by the foaming agent were not sufficiently included inside the superabsorbent polymer, and it was very difficult to control a size of the pore formed inside the superabsorbent polymer by the known method. Accordingly, the superabsorbent polymer prepared by the former method could not attain a desired level of the absorption rate under a pressure or under no pressure.

Meanwhile, since there is a technical limitation in controlling the superabsorbent polymer to have a small particle size, the latter method may not sufficiently increase the absorption surface area of the superabsorbent polymer. Accordingly, there is a need for studies to increase the absorption surface area of the superabsorbent polymer.
US2014/0312273 A1 discloses a method for preparing superabsorbent polymer, comprising the steps: crosslinking polymerization of a monomer mixture including water-soluble ethylene-based unsaturated monomers having acidic groups, an internal crosslinker, a foaming agent and a water-soluble compound having a viscosity of 2.0 to 5.0 cps to form a gel polymer, drying, pulverizing and size sorting the gel polymer to form a base polymer powder, and surface-crosslinking the base polymer powder.

[Disclosure]

[Technical Problem]

The present invention relates to a method of preparing a superabsorbent polymer with a high absorption rate.

[Technical Solution]

According to an embodiment of the present invention, provided is a method of preparing a superabsorbent polymer, the method comprising the steps of:

performing crosslinking polymerization of a monomer mixture in the presence of an internal crosslinking agent to form a water-containing gel polymer, the monomer mixture including water-soluble ethylene-based unsaturated monomers having acidic groups which are at least partially neutralized, a foaming agent, a surfactant, a foam promoter, and a water-soluble compound which exhibits a viscosity of 2.0 mPa s (cps) to 5.0 mPa s (cps) at 25°C when 1% by weight thereof is diluted with water, as measured using BROOKFIELD viscosmeter DV2T at 200 rpm;
drying, pulverizing, and size-sorting the water-containing gel polymer to form a base polymer powder; and
additionally crosslinking the surface of the base polymer powder in the presence of a surface crosslinking agent to form a surface-crosslinked layer,
wherein polysiloxane with polyether side chains is used as the surfactant,

an inorganic acid aluminum salt and/or an organic acid aluminum salt are/is used as the foam promoter, polyvinyl alcohol, polyalkylene glycol, glycerol, or a mixture thereof is used as the water-soluble compound, and the water-soluble compound is used in an amount of 0.1% by weight to 1% by weight with respect to a total weight of the monomer mixture.

In the step of forming the water-containing gel polymer, one or more carbonates selected from the group consisting of magnesium carbonate, calcium carbonate, sodium bicarbonate, sodium carbonate, potassium bicarbonate, and potassium carbonate may be used as the foaming agent.

The foaming agent may be used in an amount of 0.1% by weight to 1% by weight with respect to a total weight of the monomer mixture.

Meanwhile, polysiloxane with polyether side chains is used as the surfactant.

The surfactant may be used in an amount of 5 ppm to 80 ppm with respect to the total weight of the monomer mixture.

An inorganic acid aluminum salt and/or an organic acid aluminum salt is used as the foam promoter. In this regard, the foam promoter may be used in an amount of 0.1% by weight to 1 % by weight with respect to the total weight of the monomer mixture.

Meanwhile, polyvinyl alcohol, polyalkylene glycol, glycerol, or a mixture thereof is used as the water-soluble compound. Such water-soluble compound is used in an amount of 0.1% by weight to 1% by weight with respect to the total weight of the monomer mixture.

In the step of forming the surface-crosslinked layer, one or more polyols selected from the group consisting of ethylene glycol, propylene glycol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol, and glycerol; or one or more carbonate-based compounds selected from the group consisting of ethylene carbonate and propylene carbonate may be used as the surface crosslinking agent.

The surface crosslinking agent may be used in an amount of 0.01% by weight to 3% by weight with respect to a total weight of the base polymer powder.

Meanwhile, in the step of forming the surface-crosslinked layer, the surface-crosslinked layer may be formed in the presence of one or more inorganic materials of silica, clay, alumina, a silica-alumina composite, titania, zinc oxide, and aluminum sulfate.

In the step of forming the surface-crosslinked layer, the surface-crosslinked layer may be formed at a temperature of 100°C to 250°C.

The superabsorbent polymer prepared according to the preparation method of an embodiment may exhibit characteristics that centrifuge retention capacity (CRC) in a physiological saline solution is 29 g/g to 32 g/g, a vortex time is 20 seconds to 40 seconds, and absorbency under load (5min gel-vac-AUL) of the superabsorbent polymer, as measured after swelling the superabsorbent polymer in the physiological saline solution under a load of 2.068 kPa (0.3 psi) for 5 minutes and removing residual liquid under vacuum, is 19 g/g to 21 g/g.

[Effect of the Invention]

A method of preparing a superabsorbent polymer according to an embodiment of the present invention may provide a superabsorbent polymer which has an optimized pore size and porosity to have an increased absorption surface area. This superabsorbent polymer may exhibit a high absorption rate under a pressure or under no pressure.

[Detailed Description of the Embodiments]

Hereinafter, a method of preparing a superabsorbent polymer according to a specific embodiment of the present invention and a superabsorbent polymer prepared thereby will be described.

According to an embodiment of the present invention, provided is a method of preparing a superabsorbent polymer, the method comprising the steps of:

performing crosslinking polymerization of a monomer mixture in the presence of an internal crosslinking agent to form a water-containing gel polymer, the monomer mixture including water-soluble ethylene-based unsaturated monomers having acidic groups which are at least partially neutralized, a foaming agent, a surfactant, a foam promoter, and a water-soluble compound which exhibits a viscosity of 2.0 mPa s (cps) to 5.0 mPa s (cps) at 25°C when 1% by weight thereof is diluted with water, as measured using BROOKFIELD viscosmeter DV2T at 200 rpm; drying, pulverizing, and size-sorting the water-containing gel polymer to form a base polymer powder; and additionally crosslinking the surface of the base polymer powder in the presence of a surface crosslinking agent to form a surface-crosslinked layer,

wherein polysiloxane with polyether side chains is used as the surfactant,
an inorganic acid aluminum salt and/or an organic acid aluminum salt are/is used as the foam promoter,
polyvinyl alcohol, polyalkylene glycol, glycerol, or a mixture thereof is used as the water-soluble compound, and
the water-soluble compound is used in an amount of 0.1% by weight to 1% by weight with respect to a total weight
of the monomer mixture.

Experimental results of the present inventors confirmed that when the above-described surfactant, foam promoter, and water-soluble compound are used in the foam polymerization of a superabsorbent polymer, the superabsorbent polymer may have an optimized pore size, porosity, etc., and therefore, its absorption area may be effectively improved, thereby completing the present invention. The superabsorbent polymer prepared according to the preparation method of an embodiment may exhibit a high absorption rate under a pressure or under no pressure due to the improved absorption area.

Hereinafter, the method of preparing the superabsorbent polymer according to an embodiment will be described in more detail.

In the preparation method according to an embodiment, as the water-soluble ethylene-based unsaturated monomer, any one or more selected from the group consisting of an anionic monomer such as acrylic acid, (meth)acrylic acid, maleic anhydride, fumaric acid, crotonic acid, itaconic acid, 2-acryloylethane sulfonic acid, 2-methacryloylethane sulfonic acid, 2-(meth)acryloylpropane sulfonic acid, or 2-(meth)acrylamide-2-methyl propane sulfonic acid, and salts thereof; a nonionic hydrophilic monomer such as (meth)acrylamide, N-substituted (meth)acrylate, 2-hydroxyethyl(meth)acrylate, 2-hydroxypropyl(meth)acrylate, methoxy polyethylene glycol (meth)acrylate, or polyethylene glycol (meth)acrylate; and an amino group-containing unsaturated monomer such as (N,N)-dimethylaminoethyl(meth)acrylate or (N,N)-dimethylaminopropyl(meth)acrylamide, and a quaternary compound thereof may be used. Among them, acrylic acid or salts thereof, for example, acrylic acid which is at least partially neutralized, and/or alkali metal salts thereof such as sodium salts thereof may be used, and it is possible to prepare a superabsorbent polymer having superior physical properties by using these monomers. When the alkali metal salt of acrylic acid is used as the monomer, acrylic acid may be used after being neutralized with a basic compound such as caustic soda (NaOH). In this regard, a neutralization degree of the water-soluble ethylene-based unsaturated monomer may be controlled in the range of about 50% to about 95% or about 70% to about 85%. When the water-soluble ethylene-based unsaturated monomer is neutralized within the above range, it is possible to provide a superabsorbent polymer having excellent centrifuge retention capacity without concern about precipitation.

In the monomer mixture including the water-soluble ethylene-based unsaturated monomers, the concentration of the water-soluble ethylene-based unsaturated monomer may be about 20% by weight to about 60% by weight, or about 40% by weight to about 50% by weight, with respect to a total weight of the monomer mixture including raw materials described below and a solvent, and the concentration may be properly controlled, in consideration of a polymerization time and reaction conditions. However, if the monomer concentration is too low, the yield of the superabsorbent polymer may become low and an economic problem may occur. On the contrary, if the concentration is too high, there is a process problem that a part of the monomers is precipitated, or pulverization efficiency is lowered upon pulverization of the polymerized water-containing gel polymer, and the physical properties of the superabsorbent polymer may be deteriorated.

As the foaming agent that enables formation of a plurality of pores in the base polymer powder, carbonate, etc. may be used. More specifically, examples of the carbonate may include one or more selected from the group consisting of magnesium carbonate, calcium carbonate, sodium bicarbonate, sodium carbonate, potassium bicarbonate, and potassium carbonate.

As the surfactant for inducing stable bubble formation of the foaming agent polysiloxane containing polyether side chains is used. Among them, a silicone-based surfactant having a structure of a polydimethylsiloxane backbone with polyether sides chains such as poly(ethylene oxide) or poly(propylene oxide) may be used. Examples of the surfactant may include OFX-0190 Fluid (PEG/PPG-18/18 Dimethicone), OFX-0193 Fluid (PEG-12 Dimethicone), OFX-5220 Fluid (PEG/PPG-17/18 Dimethicone), OFX-5324 Fluid (PEG-12 Dimethicone) of Xiameter(R), etc.

Further, in the step of forming the water-containing gel polymer, the foaming agent, the surfactant, and the foam promoter may be used together to optimize the foaming degree, thereby preparing a superabsorbent polymer having a pore size and porosity at desired levels. This superabsorbent polymer may exhibit a high absorption rate, excellent absorbency under load, liquid permeability, etc. even in a partially swollen state, thereby effectively avoiding a rewetting phenomenon, in which the rewetting phenomenon causes the liquid absorbed by the superabsorbent polymer to leak back out by an external pressure.

As the foam promoter for promoting bubble generation of the foaming agent, an inorganic acid aluminium salt such as aluminum sulfate, aluminum chloride, etc., or an organic acid aluminium salt such as aluminum lactate, aluminum oxalate, aluminum citrate, aluminum urate, etc. is used.

In the monomer mixture including the water-soluble ethylene-based unsaturated monomers, etc., a concentration of the foaming agent may be about 0.1 to about 1% by weight with respect to the total monomer mixture, a concentration of the foam promoter may be about 0 to about 1% by weight or about 0.1 to about 1% by weight with respect to the total monomer mixture, and a concentration of the surfactant may be about 5 to about 80 ppm or about 10 to about 50 ppm with respect to the total weight of the monomer mixture.

When the foaming agent, the foam promoter, and the surfactant may be used within the above ranges, the pore size, porosity, etc. of the superabsorbent polymer may be optimized to remarkably improve the absorption surface area, thereby improving the absorption rate and anti-rewetting effect. Further, when a silicone-based surfactant is employed as the surfactant, flowability of the superabsorbent polymer may be improved due to a lubricating action of the silicone-based surfactant.

Meanwhile, in the method of preparing the superabsorbent polymer according to an embodiment, a water-soluble compound that is dissolved in water to exhibit viscosity is used in the step of forming the water-containing gel polymer such that a large amount of bubbles generated by the foaming agent, etc. may be included in the water-containing gel polymer and a plurality of pores in the water-containing gel polymer may be stably maintained in the subsequent process.

More specifically, when the water-soluble compound is used in the step of forming the water-containing gel polymer, viscosity of a polymerization solution may be improved to shorten a gelation time at the time of performing crosslinking polymerization of the monomer mixture including the water-soluble ethylene-based unsaturated monomers, etc. Therefore, escaping of a large amount of bubbles generated by the foaming agent, etc. from the polymerization solution may be effectively prevented, and a large amount of bubbles may be included in the water-containing gel polymer. Further, the water-soluble compound may be included in a superabsorbent polymer finally prepared to improve wettability of the superabsorbent polymer. Accordingly, its absorption rate under no pressure or under a pressure may be further increased.

As the water-soluble compound, a water-soluble compound which exhibits a viscosity of 2.0 mPas (cps) to 5.0 mPas (cps) at 25°C when 1% by weight thereof is diluted with water may be used. The viscosity may be a value measured with a BROOKFIELD viscosmeter DV2T under a condition of 200 rpm.

The water-soluble compound includes polyvinyl alcohol, polyalkylene glycol, glycerol, or a mixture thereof. In this regard, a homopolymer such as polyethylene glycol, polypropylene glycol, etc., or a copolymer such as ethylene glycol, propylene glycol, etc. may be used as the polyalkylene glycol.

A concentration of the water-soluble compound is about 0.1 to 1% by weight with respect to the total monomer mixture. Within this range, the absorption area and wettability of the superabsorbent polymer may be effectively increased.

As the internal crosslinking agent to introduce a basic crosslinked structure into the base polymer powder, any internal crosslinking agent having a crosslinkable functional group which has been generally used in the preparation of the superabsorbent polymer may be used without limitation. However, to further improve physical properties of the superabsorbent polymer by introducing a proper crosslinked structure into the base polymer powder, a multifunctional acrylate-based compound having a plurality of ethylene oxide groups may be used as the internal crosslinking agent. More specific examples of the internal crosslinking agent may include one or more selected from the group consisting of polyethylene glycol diacrylate (PEGDA), glycerin diacrylate, glycerin triacrylate, non-modified or ethoxylated trimethylol propane triacrylate (TMPTA), hexanediol diacrylate, and triethylene glycol diacrylate. The internal crosslinking agent may be included in an amount of about 0.01% by weight to about 0.5% by weight with respect to the monomer mixture, thereby crosslinking the polymerized polymer.

In addition, the monomer mixture may further include a polymerization initiator which is generally used in the preparation of the superabsorbent polymer.

Specifically, the polymerization initiator may be a thermal polymerization initiator or a photo-polymerization initiator by UV irradiation, depending on a polymerization method. However, even though the photo-polymerization is performed, a certain amount of heat may be generated by UV irradiation, etc., and also generated with exothermic polymerization reaction. Therefore, the thermal polymerization initiator may be further included.

As the photo-polymerization initiator, a compound capable of forming radicals by a light such as UV may be used without limitations in the constitution.

For example, one or more selected from the group consisting of benzoin ether, dialkyl acetophenone, hydroxyl alkylketone, phenyl glyoxylate, benzyl dimethyl ketal, acyl phosphine, and α-aminoketone may be used as the photo-polymerization initiator. Meanwhile, as the specific example of acyl phosphine, commercial lucirin TPO, namely, 2,4,6-trimethyl-benzoyl-trimethyl phosphine oxide may be used. More various photo-polymerization initiators are well disclosed in "UV Coatings: Basics, Recent Developments and New Application (Elsevier, 2007)" written by Reinhold Schwalm, p115, however, they are not limited to the above described examples.

The photo-polymerization initiator may be included in an amount of about 0.01% by weight to about 1.0% by weight with respect to the monomer mixture. If the concentration of the photo-polymerization initiator is too low, the polymerization rate may become low. If the concentration of the photo-polymerization initiator is too high, a molecular weight of the superabsorbent polymer may become low and its physical properties may not be uniform.

Further, one or more selected from the group consisting of persulfate-based initiators, azo-based initiators, hydrogen peroxide, and ascorbic acid may be used as the thermal polymerization initiator. Specific examples of the persulfate-based initiators may include sodium persulfate ($Na_2S_2O_8$), potassium persulfate ($K_2S_2O_8$), ammonium persulfate (($NH_4$)$_2S_2O_8$), etc. Examples of the azo-based initiators may include 2,2-azobis(2-amidinopropane)dihydrochloride, 2,2-azobis-(N,N-dimethylene)isobutyramidine dihydrochloride, 2-(carbamoylazo)isobutylonitrile, 2,2-azobis(2-[2-imidazolin-2-yl]propane)dihydrochloride, 4,4-azobis-(4-cyanovaleric acid), etc. More various thermal polymerization initiators are well-disclosed in 'Principle of Polymerization (Wiley, 1981)' written by Odian, p203, however, they are not limited to the above described examples.

The thermal polymerization initiator may be included in an amount of about 0.001% by weight to about 0.5% by weight with respect to the monomer mixture. If the concentration of the thermal polymerization initiator is too low, additional thermal polymerization hardly occurs, and thus the addition effect of the thermal polymerization initiator may not be sufficiently obtained. If the concentration of the thermal polymerization initiator is too high, the molecular weight of the superabsorbent polymer may become low and its physical properties may not be uniform.

The monomer mixture may further include an additive such as a thickener, a plasticizer, a preservation stabilizer, an antioxidant, etc., if necessary.

The raw materials such as the above-described water-soluble ethylene-based unsaturated monomer, foaming agent, surfactant, foam promoter, water-soluble compound, photo-polymerization initiator, thermal polymerization initiator, internal crosslinking agent, and additive may be prepared in the form of being dissolved in a solvent.

In this regard, as the solvent, any solvent may be used without limitations in the constitution as long as it is able to dissolve the above ingredients, and for example, one or more selected from water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, and N,N-dimethylacetamide may be used in combination.

The solvent may be included in a remaining amount excluding the above described components from the total weight of the monomer mixture.

Meanwhile, the method of forming the water-containing gel polymer by thermal polymerization or photo-polymerization of the monomer mixture may be carried out in a reactor like a kneader equipped with agitating spindles in order to promote bubble generation.

As described above, the water-containing gel polymer which is discharged from the outlet of a reactor by providing a polymerization energy source such as heat or light to the reactor like a kneader equipped with the agitating spindles may have a size of centimeters or millimeters, according to the type of agitating spindles equipped in the reactor. Specifically, the water-containing gel polymer may be obtained in various forms according to the concentration of the monomer mixture fed thereto, the feeding speed, etc. Generally, the water-containing gel polymer having a weight average particle size of about 2 mm to about 50 mm may be obtained.

In this regard, the water-containing gel polymer thus obtained by the method may have generally a water content of about 40% by weight to about 80% by weight. Meanwhile, the term "water content", as used herein, means a water content in the total weight of the water-containing gel polymer, which is obtained by subtracting the weight of the dry polymer from the weight of the water-containing gel polymer. Specifically, the water content is defined as a value calculated by measuring the weight loss according to evaporation of water in the polymer during the drying process of increasing the temperature of the polymer with infrared heating. In this regard, the water content is measured under the drying conditions which are determined as follows; the temperature is increased from room temperature to about 180°C and then the temperature is maintained at 180°C, and the total drying time is determined as 20 minutes, including 5 minutes for the temperature rising step.

After crosslinking polymerization of the monomers, drying, pulverizing, and size-sorting processes may be performed to obtain the base polymer powder. Through the pulverizing and size-sorting processes, the base polymer powder and the superabsorbent polymer obtained therefrom are suitably prepared and provided such that they have a particle size of about 150 $\mu$m to about 850 $\mu$m. More specifically, at least about 95% by weight of the base polymer powder and the superabsorbent polymer obtained therefrom may have a particle size of about 150 $\mu$m to about 850 $\mu$m, and fine powder having a particle size of less than about 150 $\mu$m may be less than about 3% by weight.

As such, when particle size distributions of the base polymer powder and the superabsorbent polymer are controlled within the preferred range, the superabsorbent polymer finally prepared may exhibit excellent absorption properties.

Meanwhile, the methods of performing the drying, pulverizing, and size-sorting will be described in more detail as follows.

First, in drying the water-containing gel polymer, a coarse pulverization process may be further carried out before drying in order to increase the efficiency of the drying process, if necessary.

There is no limitation in the constitution of a milling machine to be used. Specifically, any one device selected from the group consisting of a vertical pulverizer, a turbo cutter, a turbo grinder, a rotary cutter mill, a cutter mill, a disc mill, a shred crusher, a crusher, a chopper, and a disc cutter may be used, but it is not limited thereto.

In this regard, the coarse pulverization may be carried out such that the water-containing gel polymer has a particle size of about 2 mm to about 10 mm.

Due to the high water content, it is technically not easy to pulverize the water-containing gel polymer into a particle size of less than 2 mm, and a phenomenon of agglomeration between the pulverized particles may occur. Meanwhile, when the particle size is larger than 10 mm, the effect of increasing the efficiency of the subsequent drying process may be unsatisfactory.

The water-containing gel polymer coarsely pulverized as above or the water-containing gel polymer immediately after polymerization without the coarse pulverizing step is subjected to drying. In this case, a drying temperature of the drying step may be about 50°C to about 250°C.

When the drying temperature is lower than 50°C, it is likely that the drying time becomes too long or the physical properties of the superabsorbent polymer finally formed are deteriorated, and when the drying temperature is higher than 250°C, only the surface of the polymer is dried, and thus it is likely that fine powder is generated during the subsequent pulverizing step and the physical properties of the superabsorbent polymer finally formed are deteriorated.

Meanwhile, the drying time may be about 20 minutes or about 15 hours, in consideration of process efficiency, etc., but is not limited thereto.

The drying method of the drying step may also be selected and used without any limitation in the constitution, as long as it is a method generally used for drying the water-containing gel polymer. Specifically, the drying step may be carried out by a method such as hot air supply, infrared irradiation, microwave irradiation, or ultraviolet irradiation. When the drying step as above is finished, the water content of the polymer may be about 0.1% by weight to about 10% by weight.

Subsequently, the dried polymer obtained through the drying step is subjected to a pulverization step.

The polymer powder obtained through the pulverizing step may have a particle size of about 150 $\mu$m to about 850 $\mu$m. Specific examples of a milling machine used to achieve the above particle size may include a pin mill, a hammer mill, a screw mill, a roll mill, a disc mill, a jog mill, etc., but is not limited thereto.

Also, in order to manage the physical properties of the superabsorbent polymer powder finally commercialized after the pulverization step, a separate process of sorting the polymer powder obtained after the pulverization depending on the particle size may be performed. Preferably, a polymer having a particle size of about 150 $\mu$m to about 850 $\mu$m is sorted, and only the polymer powder having such a particle size is subjected to the surface crosslinking reaction and finally commercialized. A particle size distribution of the base polymer powder obtained through this process has been described, and a specific description thereof will be omitted.

Meanwhile, after the process of forming the above-described base polymer powder, the surface of the base polymer powder may be further crosslinked in the presence of the surface crosslinking agent to form the surface-crosslinked layer, thereby preparing the superabsorbent polymer.

The surface-crosslinked layer may be formed by using a surface crosslinking agent which has been used in the preparation of the superabsorbent polymer. As the surface crosslinking agent, any surface crosslinking agent known in the art to which the present invention pertains may be used without limitation. More specific examples thereof may include polyols such as ethylene glycol, propylene glycol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol, glycerol, etc.; or carbonate-based compounds such as ethylene carbonate, propylene carbonate, etc. Such surface crosslinking agent may be used in an amount of about 0.01% by weight to 3% by weight with respect to the total weight of the base polymer powder.

In the surface crosslinking process, the surface crosslinking process may be carried out by further adding one or more inorganic materials selected from the group consisting of silica, clay, alumina, a silica-alumina composite, titania, zinc oxide, and aluminum sulfate, in addition to the surface crosslinking agent.

These inorganic materials may be used in a powdery form or in a liquid form, and in particular, alumina powder, silica-alumina powder, titania powder, or a nanosilica solution may be used. Further, the inorganic material may be used in an amount of about 0.05% by weight to about 2% by weight with respect to the total weight of the base polymer powder.

Further, in the surface crosslinking process, when the surface crosslinking is performed by adding a multivalent metal cation instead of the inorganic material or together with the inorganic material, the surface crosslinked structure of the superabsorbent polymer may be further optimized. This may be because the metal cation forms a chelate with a carboxyl group (COOH) of the superabsorbent polymer to further reduce a crosslinking distance.

There is no limitation in the method of adding the surface crosslinking agent, if necessary, the inorganic material and/or the multivalent metal cation to the base polymer powder. For example, a method of adding and mixing the surface crosslinking agent with the base polymer powder in a reactor, a method of spraying the surface crosslinking agent onto the base polymer powder, and a method of continuously mixing the base polymer powder and the surface crosslinking agent while providing them to a mixer that is continuously operated may be used.

When the surface crosslinking agent is added thereto, water and methanol may be further mixed therewith. When water and methanol are added thereto, there is an advantage that the surface crosslinking agent may be evenly dispersed in the base polymer powder. At this time, amounts of water and methanol to be added may be regulated for the purposes of inducing a uniform dispersion of the surface crosslinking agent, preventing an agglomeration phenomenon of the base polymer powder, and optimizing a surface penetration depth of the surface crosslinking agent.

The surface crosslinking reaction may be carried out by heating the base polymer powder, to which the surface crosslinking agent is applied, at about 100°C or higher for about 20 minutes or more. Particularly, in order to prepare the superabsorbent polymer that may exhibit more excellent effects described above, the surface crosslinking process conditions may be controlled such that a maximum reaction temperature is about 100°C to about 250°C.

The maximum reaction temperature may be maintained for about 20 minutes or more, or for about 20 minutes and 1 hour or less. Furthermore, the heat-up time from the reaction initiation temperature, for example, about 100°C or higher, to the maximum reaction temperature may be controlled to be about 10 minutes or more, or about 10 minutes or more and 1 hour or less.

A means for raising the temperature for surface crosslinking reaction is not particularly limited. Heating may be performed by providing a heating medium or by directly providing a heat source. In this regard, the type of the heating medium applicable may be a hot fluid such as steam, hot air, hot oil, etc., but is not limited thereto. The temperature of the heating medium provided may be properly selected in consideration of the means of the heating medium, a heating speed, and a target temperature of heating. Meanwhile, an electric heater or a gas heater may be used as the heat source provided directly, but the heat source is not limited to these examples.

The superabsorbent polymer obtained by the above-described preparation method may exhibit excellent absorption rate under a pressure or under no pressure, due to the optimized absorption surface area. Further, the superabsorbent polymer may exhibit an excellent absorption rate and high gel strength even in a partially swollen state, thereby effectively avoiding a rewetting phenomenon.

More specifically, the superabsorbent polymer prepared according to the preparation method of an embodiment may exhibit characteristics that centrifuge retention capacity (CRC) in a physiological saline solution is 29 g/g to 32 g/g, or 30 g/g to 31 g/g, a vortex time is 20 seconds to 40 seconds, and absorbency under load (5min gel-vac-AUL) of the superabsorbent polymer, as measured after swelling the superabsorbent polymer in the physiological saline solution under a load of 2.068 kPa (0.3 psi) for 5 minutes and removing residual liquid under vacuum, is 19 g/g to 21 g/g.

The centrifuge retention capacity (CRC) in a physiological saline solution may be measured in accordance with EDANA method WSP 241.2. More specifically, the centrifuge retention capacity may be calculated by the following Calculation Formula 1, after allowing the superabsorbent polymer to absorb the physiological saline solution over 30 minutes:

[Calculation Formula 1]

$$CRC(g/g) = \{[W_2(g) - W_1(g)]/W_0(g)\} - 1$$

wherein $W_0(g)$ is an initial weight (g) of the superabsorbent polymer, $W_1(g)$ is a weight of an apparatus, which is measured after draining water off at 250 G for 3 minutes using a centrifuge without the superabsorbent polymer, and $W_2(g)$ is the weight of the apparatus including the superabsorbent polymer, which is measured after immersing the superabsorbent polymer in 0.9 wt% physiological saline solution at room temperature for 30 minutes and draining water off at 250 G for 3 minutes using a centrifuge.

The vortex time may be measured in seconds in accordance with a method described in International Patent Application No. 1987-003208. More specifically, the vortex time may be calculated by measuring a time which is required until the vortex disappears, after adding 2 g of the superabsorbent polymer to 50 mL of a physiological saline solution and then agitating it at 600 rpm.

Lastly, absorbency under load (5min gel-vac-AUL) of the superabsorbent polymer, which is measured by swelling the superabsorbent polymer in a physiological saline solution under a load of 2.068 kPa (0.3 psi) for 5 minutes and removing residual liquid under vacuum, is a factor for evaluating absorption rate under load and performances, and may be measured as follows. First, the superabsorbent polymer is allowed to absorb the physiological saline solution under a load of about 2.068 kPa (0.3 psi) for 5 minutes. Then, residual liquid not absorbed into the superabsorbent polymer is removed under vacuum. In this regard, residual liquid not absorbed between the superabsorbent polymer particles is removed, and liquid absorbed by the superabsorbent polymer is not removed under vacuum. Unlike a known method of measuring absorbency under load, a method of measuring 5min gel-vac-AUL may evaluate absorbency under load of the superabsorbent polymer with more accuracy, because residual liquid existing between superabsorbent polymer particles does not influence the measurement values.

5min gel-vac-AUL of the superabsorbent polymer may be calculated by the following Calculation Formula 2:

[Calculation Formula 2]

$$5min\ gel\text{-}vac\text{-}AUL(g/g) = [W_4(g) - W_3(g)]/\ W_0(g)$$

wherein $W_0(g)$ is an initial weight (g) of the superabsorbent polymer,
$W_3(g)$ is the sum of the weight of the superabsorbent polymer and the weight of the apparatus capable of providing a load for the superabsorbent polymer, and
$W_4(g)$ is the sum of the weight of the superabsorbent polymer which is measured after allowing the superabsorbent polymer to absorb the physiological saline solution under a load (2.068 kPa (0.3 psi)) for 5 minutes and removing residual liquid using a vacuum apparatus, and the weight of the apparatus capable of providing a load for the superabsorbent polymer.

Based on the above physical properties, it was confirmed that the superabsorbent polymer prepared according to the preparation method of an embodiment may exhibit not only excellent basic absorption performances but also remarkably improved absorption rate under a pressure or under no pressure, and as a result, the superabsorbent polymer may be applied to a variety of hygiene products such as diapers, etc., thereby exhibiting very excellent physical properties.
Hereinafter, the actions and effects of the present invention will be described in more detail with reference to specific Examples of the present invention. However, these Examples are for illustrative purposes only, and the scope of the invention is not intended to be limited thereby.
In the following Examples, % represents % by weight unless otherwise mentioned.

Comparative Example 1: Preparation of superabsorbent polymer

11 g (110 ppm with respect to a monomer composition) of 0.5% IRGACURE 819 initiator diluted with acrylic acid and 26 g of 5% polyethylene glycol diacrylate (PEGDA, a molecular weight of 400) diluted with acrylic acid were mixed to prepare a solution (solution A).
5% trimethylolpropane triacrylate containing 9 mol% of ethylene oxide (Ethoxylated-TMPTA, TMP(EO)9TA, M-3190 Miwon Specialty Chemical Co., Ltd.) diluted with acrylic acid was prepared as a solution (solution B).
Into a 2 L-volume glass reactor surrounded by a jacket in which a heating medium precooled to 25°C was circulated, 37 g of the solution A and 14 g of the solution B were injected. To the glass reactor, 800 g of a 24% caustic soda solution (solution C) was slowly added dropwise and mixed. After confirming that the temperature of the mixed solution increased to about 72°C or higher by neutralization heat upon adding dropwise the solution C, the mixed solution was left until it was cooled. A neutralization degree of acrylic acid in the mixed solution thus obtained was about 70 mol%.
Subsequently, the above-prepared mixed solution was poured in a Vat-type tray (15 cm in width × 15 cm in length) installed in a square polymerizer which had a light irradiation device installed at the top and was preheated to 80°C, and the mixed solution was subjected to light irradiation. It was confirmed that at about 20 seconds after light irradiation, gel was generated from the surface, and at about 30 seconds after light irradiation, polymerization occurred. Then, the reaction was allowed for additional 2 minutes, and the polymerized sheet was taken and cut in a size of 3 cm × 3 cm, and then subjected to a chopping process using a meat chopper to prepare the cut sheet as crumbs.
Subsequently, the crumbs were dried in an oven capable of shifting airflow up and down. The crumbs were uniformly dried by flowing hot air at 180°C from the bottom to the top for 15 minutes and from the top to the bottom for 15 minutes such that the dried crumbs had a water content of about 2% or less. The dried crumbs were pulverized using a pulverizer and sorted by size, and a base polymer having a size of about 150 $\mu$m to about 850 $\mu$m was obtained.
Thereafter, 100 g of the base polymer was mixed with a crosslinking agent solution which was prepared by mixing 3 g of water, 3 g of methanol, 0.4 g of ethylene carbonate, and 0.5 g of Aerosil 380 (EVONIK), and then surface crosslinking reaction was allowed at 190°C for 30 minutes. The resulting product was pulverized and then passed through a sieve to obtain a surface-crosslinked superabsorbent polymer having a particle size of 150 $\mu$m to 850 $\mu$m.

Comparative Example 2: Preparation of superabsorbent polymer

A 5% sodium bicarbonate solution (solution D) diluted with water was prepared. A surface-crosslinked superabsorbent polymer having a particle size of 150 $\mu$m to 850 $\mu$m was prepared in the same manner as in Comparative Example 1, except that 34 g of the above prepared solution D was injected to and mixed with the mixed solution, when the temperature of the mixed solution increased by neutralization heat upon adding dropwise the solution C and then was cooled to about 45°C in Comparative Example 1.

Comparative Example 3: Preparation of superabsorbent polymer

A surface-crosslinked superabsorbent polymer having a particle size of 150 $\mu$m to 850 $\mu$m was prepared in the same manner as in Comparative Example 1, except that after injecting solution A and solution B, 30 ppm of Ryoto Sugar Ester S-1670 (Mitsubishi-Kagaku foods) as a surfactant was added thereto and mixed therewith in Comparative Example 2.

Comparative Example 4: Preparation of superabsorbent polymer

A surface-crosslinked superabsorbent polymer having a particle size of 150 $\mu$m to 850 $\mu$m was prepared in the same manner as in Comparative Example 1, except that after injecting solution A and solution B, 30 ppm of OFX-0193 (XIAMETER(R)) as a silicone-based surfactant was added thereto and mixed therewith in Comparative Example 2.

Example 1: Preparation of superabsorbent polymer

11 g (110 ppm with respect to a monomer composition) of 0.5% IRGACURE 819 initiator diluted with acrylic acid and 26 g of 5% polyethylene glycol diacrylate (PEGDA, a molecular weight of 400) diluted with acrylic acid were mixed to prepare a solution (solution A).

5% trimethylolpropane triacrylate containing 9 mol% of ethylene oxide (Ethoxylated-TMPTA, TMP(EO)9TA, M-3190 Miwon Specialty Chemical Co., Ltd.) diluted with acrylic acid was prepared as a solution (solution B).

Into a 2 L-volume glass reactor surrounded by a jacket in which a heating medium precooled to 25°C was circulated, 37 g of the solution A and 14 g of the solution B were injected. To the glass reactor, 30 ppm of OFX-0193 (XIAMETER(R)) as a silicone-based surfactant was added thereto and mixed therewith, and then 800 g of a 24% caustic soda solution (solution C) was slowly added dropwise and mixed. After confirming that the temperature of the mixed solution increased to about 72°C or higher by neutralization heat upon adding dropwise the solution C, the mixed solution was left until it was cooled. A neutralization degree of acrylic acid in the mixed solution thus obtained was about 70 mol%.

Meanwhile, a 5% sodium bicarbonate solution (solution D) diluted with water was prepared, and a solution (solution E) was prepared by dissolving 1.6 g of aluminum sulfate in 28 g of a 4% sodium persulfate solution diluted with water.

When the temperature of the mixed solution was cooled to about 45°C, 34 g of the solution D previously prepared was injected to and mixed with the mixed solution, and the solution E was injected at the same time. Thereafter, 0.3% by weight of polyvinyl alcohol (viscosity measured using BROOKFIELD viscosmeter DV2T at 200 rpm after being diluted with water at 1% by weight: 3.2 mPas (cps) with respect to the total monomer mixture was injected thereto and mixed therewith.

The mixed solution thus prepared was used to prepare a surface-crosslinked superabsorbent polymer having a particle size of 150 $\mu$m to 850 $\mu$m in the same manner as in Comparative Example 1.

Example 2: Preparation of superabsorbent polymer

A surface-crosslinked superabsorbent polymer having a particle size of 150 $\mu$m to 850 $\mu$m was prepared in the same manner as in Example 1, except that 0.8% by weight of polyvinyl alcohol with respect to the total monomer mixture was used in Example 1.

Example 3: Preparation of superabsorbent polymer

A surface-crosslinked superabsorbent polymer having a particle size of 150 $\mu$m to 850 $\mu$m was prepared in the same manner as in Example 1, except that 0.3% by weight of polyethylene glycol (viscosity measured using BROOKFIELD viscosmeter DV2T at 200 rpm after being diluted with water at 1% by weight: 2.4 mPas (cps) with respect to the total monomer mixture was used instead of polyvinyl alcohol in Example 1.

Example 4: Preparation of superabsorbent polymer

A surface-crosslinked superabsorbent polymer having a particle size of 150 $\mu$m to 850 $\mu$m was prepared in the same manner as in Example 1, except that 0.8% by weight of polyethylene glycol with respect to the total monomer mixture was used in Example 3.

Experimental Example: Evaluation of superabsorbent polymer

Properties of the superabsorbent polymers prepared in Comparative Examples 1 to 4 and Examples 1 to 5 were evaluated as follows, and shown in the following Table 1.

(1) Centrifuge retention capacity (CRC)

Centrifuge retention capacity (CRC) in a physiological saline solution was measured for the superabsorbent polymers of Comparative Examples 1 to 4 and Examples 1 to 4 in accordance with EDANA method WSP 241.2.

In detail, among the superabsorbent polymers to be tested for centrifuge retention capacity, superabsorbent polymers having a particle size of 300 $\mu$m to 600 $\mu$m, which were passed through a US standard 30 mesh screen and retained on a US standard 50 mesh screen, were prepared.

The superabsorbent polymer $W_0$ (g, about 0.2 g) having a particle size of 300 $\mu$m to 600 $\mu$m was uniformly placed into a nonwoven-fabric-made bag, followed by sealing. Then, the bag was immersed into 0.9% by weight of a physiological saline solution at room temperature. 30 minutes later, the bag was drained at 250 G for 3 minutes with a centrifuge, and the weight $W_2$(g) of the bag was then measured. Meanwhile, the same procedure was carried out using an empty bag having no superabsorbent polymer, and the resultant weight $W_1$(g) was measured.

Each of the weights thus obtained was used to confirm centrifuge retention capacity according to the following Equation 1:

[Calculation Formula 1]

$$CRC(g/g) = \{[W_2(g) - W_1(g)]/W_0(g)\} - 1$$

wherein $W_0$(g) is an initial weight (g) of the superabsorbent polymer having a particle size of 300 $\mu$m to 600 $\mu$m, $W_1$(g) is a weight of an apparatus which is measured after draining water off at 250 G for 3 minutes with a centrifuge without using the superabsorbent polymer, and

$W_2$(g) is the weight of the apparatus including the superabsorbent polymer, which is measured after immersing the superabsorbent polymer in 0.9% by weight of the physiological saline solution at room temperature for 30 minutes and draining water off at 250 G for 3 minutes with a centrifuge.

(2) Absorption rate (vortex time) of superabsorbent polymer

The absorption rates of the superabsorbent polymers of Comparative Examples 1 to 4 and Examples 1 to 4 were measured in seconds in accordance with a method described in International Patent Application No. 1987-003208.

In detail, the absorption rate (or vortex time) was calculated by measuring a time which was required until the vortex disappears, after adding 2 g of the superabsorbent polymer to 50 mL of a physiological saline solution and then agitating it at 600 rpm. In this regard, a stirring bar of 31.8 mm x 8 mm available from Bel Art was used as a stirring bar.

(3) 5min gel-vac-AUL

5min gel-vac-AUL was measured for the superabsorbent polymers of Comparative Examples 1 to 4 and Examples 1 to 4 according to the following method.

In detail, a 400 mesh stainless steel net was installed in the bottom of a plastic cylinder having an internal diameter of 25 mm. The superabsorbent polymer $W_0$ to be tested for 5min gel-vac-AUL was uniformly scattered on the screen at room temperature and humidity of 50%. Subsequently, a piston which may uniformly provide a load of 2.068 kPa (0.3 psi) was put thereon, in which an external diameter of the piston was slightly smaller than 25 mm, there was no gab between the internal wall of the cylinder and the piston, and the jig-jog of the cylinder was not interrupted. At this time, the weight $W_3$(g) of the apparatus was measured.

After putting a glass filter having a diameter of 90 mm and a thickness of 5 mm in a petri dish having a diameter of 150 mm, a physiological saline solution of 0.9% by weight was poured in the dish until the surface level of the physiological saline solution became equal to the upper surface of the glass filter. A sheet of filter paper having a diameter of 90 mm was put on the glass filter.

Subsequently, the prepared apparatus was put on the filter paper and the superabsorbent polymer in the apparatus was allowed to swell by the physiological solution under a load. 5 minutes later, residual liquid was removed by using a vacuum pump. At this time, residual liquid not absorbed between the superabsorbent polymer particles was removed. Then, the weight $W_4$(g) of the apparatus including the superabsorbent polymer was measured.

# EP 3 248 990 B1

5min gel-vac-AUL was calculated using the measured weight according to the following Calculation Formula 2:

$$[\text{Calculation Formula 2}]$$

$$5\text{min gel-vac-AUL(g/g)} = [W_4(g) - W_3(g)]/\, W_0(g)$$

wherein $W_0(g)$ is an initial weight (g) of the superabsorbent polymer,
$W_3(g)$ is the sum of the weight of the superabsorbent polymer and the weight of the apparatus capable of providing a load for the superabsorbent polymer, and
$W_4(g)$ is the sum of the weight of the superabsorbent polymer which is measured after allowing the superabsorbent polymer to absorb the physiological saline solution under a load (2.068 kPa (0.3 psi)) for 5 minutes and removing residual liquid between the swollen superabsorbent polymer particles using a vacuum pump, and the weight of the apparatus capable of providing a load for the superabsorbent polymer.

[Table 1]

|  | CRC [g/g] | Vortex time [sec] | 5min gel-vac AUL [g/g] |
|---|---|---|---|
| Comparative Example 1 | 31.2 | 70 | 16.5 |
| Comparative Example | 30.2 | 54 | 18.5 |
| Comparative Example 3 | 30.5 | 50 | 18.0 |
| Comparative Example 4 | 30.7 | 46 | 18.7 |
| Example 1 | 30.2 | 30 | 19.5 |
| Example 2 | 30.3 | 30 | 20.0 |
| Example 3 | 30.0 | 32 | 19.3 |
| Example 4 | 30.2 | 35 | 19.4 |

**Claims**

1. A method of preparing a superabsorbent polymer, the method comprising the steps of:

    performing crosslinking polymerization of a monomer mixture in the presence of an internal crosslinking agent to form a water-containing gel polymer, the monomer mixture including water-soluble ethylene-based unsaturated monomers having acidic groups which are at least partially neutralized, a foaming agent, a surfactant, a foam promoter, and a water-soluble compound which exhibits a viscosity of 2.0 mPa s (cps) to 5.0 mPa s (cps) at 25°C when 1% by weight thereof is diluted with water, as measured using BROOKFIELD viscosmeter DV2T at 200 rpm;
    drying, pulverizing, and size-sorting the water-containing gel polymer to form a base polymer powder; and
    additionally crosslinking the surface of the base polymer powder in the presence of a surface crosslinking agent to form a surface-crosslinked layer,
    wherein polysiloxane with polyether side chains is used as the surfactant,
    an inorganic acid aluminum salt and/or an organic acid aluminum salt are/is used as the foam promoter,
    polyvinyl alcohol, polyalkylene glycol, glycerol, or a mixture thereof is used as the water-soluble compound, and the water-soluble compound is used in an amount of 0.1% by weight to 1% by weight with respect to a total weight of the monomer mixture.

2. The method of claim 1, wherein one or more carbonates selected from the group consisting of magnesium carbonate, calcium carbonate, sodium bicarbonate, sodium carbonate, potassium bicarbonate, and potassium carbonate are used as the foaming agent.

3. The method of claim 1, wherein the foaming agent is used in an amount of 0.1% by weight to 1% by weight with respect to a total weight of the monomer mixture.

12

4. The method of claim 1, wherein the surfactant is used in an amount of 5 ppm to 80 ppm with respect to a total weight of the monomer mixture.

5. The method of claim 1, wherein the foam promoter is used in an amount of 0.1% by weight to 1% by weight with respect to a total weight of the monomer mixture.

6. The method of claim 1, wherein one or more polyols selected from the group consisting of ethylene glycol, propylene glycol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol, and glycerol; or one or more carbonate-based compounds selected from the group consisting of ethylene carbonate and propylene carbonate are used as the surface crosslinking agent.

7. The method of claim 1, wherein the surface crosslinking agent is used in an amount of 0.01% by weight to 3% by weight with respect to a total weight of the base polymer powder.

8. The method of claim 1, wherein the surface-crosslinked layer is formed in the presence of one or more inorganic materials of silica, clay, alumina, a silica-alumina composite, titania, zinc oxide, and aluminum sulfate.

9. The method of claim 1, wherein the surface-crosslinked layer is formed at a temperature of 100°C to 250°C.

10. The method of claim 1, wherein centrifuge retention capacity (CRC) in a physiological saline solution, as measured in accordance with EDANA method WSP 241.2, is 29 g/g to 32 g/g, a vortex time, as calculated by measuring a time which was required until the vortex disappears, after adding 2 g of the superabsorbent polymer to 50 mL of a physiological saline solution and then agitating it at 600 rpm, is 20 seconds to 40 seconds, and absorbency under load (5min gel-vac-AUL) of the superabsorbent polymer, as measured after swelling the superabsorbent polymer in the physiological saline solution under a load of 2.068 kPa (0.3 psi) for 5 minutes and removing residual liquid under vacuum, is 19 g/g to 21 g/g.

**Patentansprüche**

1. Verfahren zum Herstellen eines Superabsorberpolymers, wobei das Verfahren die Schritte umfasst:

   Durchführen einer Vernetzungspolymerisation einer Monomermischung in der Gegenwart eines internen Vernetzungsmittels, um ein Wasser-enthaltendes Gelpolymer zu bilden, wobei die Monomermischung wasserlösliche ungesättigte Monomere auf Ethylenbasis mit sauren Gruppen, die wenigstens teilweise neutralisiert sind, ein Schäumungsagens, ein Tensid, einen Schaumpromoter und eine wasserlösliche Verbindung, die eine Viskosität von 2,0 mPa·s (cps) bis 5,0 mPa·s (cps) bei 25°C, wenn 1 Gew.-% desselben mit Wasser verdünnt ist, wie gemessen unter Verwendung von BROOKFIELD-Viskosimeter DV2T bei 200 UpM, zeigt, einschließt;
   Trocknen, Pulverisieren und Größensortieren des Wasser-enthaltenden Gelpolymers, um ein Basispolymerpulver zu bilden; und
   zusätzliches Vernetzen der Oberfläche des Basispolymerpulvers in der Gegenwart eines Oberflächenvernetzungsmittels, um eine oberflächenvernetzte Schicht zu bilden,
   wobei Polysiloxan mit Polyetherseitenketten als das Tensid verwendet wird,
   ein anorganisches Säurealuminiumsalz und/oder ein organisches Säurealuminiumsalz als der Schaumpromoter verwendet wird bzw. werden,
   Polyvinylalkohol, Polyalkylenglykol, Glycerol oder eine Mischung derselben als die wasserlösliche Verbindung verwendet wird, und
   die wasserlösliche Verbindung in einer Menge von 0,1 Gew.-% bis 1 Gew.-% in Bezug auf ein Gesamtgewicht der Monomermischung verwendet wird.

2. Verfahren nach Anspruch 1, wobei ein oder mehrere Carbonate, ausgewählt aus der Gruppe bestehend aus Magnesiumcarbonat, Calciumcarbonat, Natriumbicarbonat, Natriumcarbonat, Kaliumbicarbonat und Kaliumcarbonat als das Schäumungsmittel verwendet werden.

3. Verfahren nach Anspruch 1, wobei das Schäumungsmittel in einer Menge von 0,1 Gew.-% bis 1 Gew.-% in Bezug auf ein Gesamtgewicht der Monomermischung verwendet wird.

4.  Verfahren nach Anspruch 1, wobei das Tensid in einer Menge von 5 ppm bis 80 ppm in Bezug auf ein Gesamtgewicht der Monomermischung verwendet wird.

5.  Verfahren nach Anspruch 1, wobei der Schaumpromoter in einer Menge von 0,1 Gew.-% bis 1 Gew.-% in Bezug auf ein Gesamtgewicht der Monomermischung verwendet wird.

6.  Verfahren nach Anspruch 1, wobei ein oder mehrere Polyole, ausgewählt aus der Gruppe bestehend aus Ethylenglykol, Propylenglykol, 1,4-Butandiol, 1,6-Hexandiol, 1,2-Hexandiol, 1,3-Hexandiol, 2-Methyl-1,3-propandiol, 2,5-Hexandiol, 2-Methyl-1,3-pentandiol, 2-Methyl-2,4-pentandiol, Tripropylenglykol und Glycerol; oder eine oder mehrere Verbindungen auf Carbonatbasis, ausgewählt aus der Gruppe bestehend aus Ethylencarbonat und Propylencarbonat als das Oberflächenvernetzungsmittel verwendet werden.

7.  Verfahren nach Anspruch 1, wobei das Oberflächenvernetzungsmittel in einer Menge von 0,01 Gew.-% bis 3 Gew.-% in Bezug auf ein Gesamtgewicht des Basispolymerpulvers verwendet wird.

8.  Verfahren nach Anspruch 1, wobei die oberflächenvernetzte Schicht in der Gegenwart eines oder mehrerer anorganischer Materialien aus Silica, Ton, Alumina, einem Silica-Alumina-Verbund, Titandioxid, Zinkoxid und Aluminiumsulfat gebildet wird.

9.  Verfahren nach Anspruch 1, wobei die oberflächenvernetzte Schicht bei einer Temperatur von 100°C bis 250°C gebildet wird.

10. Verfahren nach Anspruch 1, wobei eine Zentrifugen-Retentionskapazität (CRC) in einer physiologischen Salzlösung, wie gemessen gemäß EDANA-Verfahren WSP 241.2, 29 g/g bis 32 g/g ist, eine Vortex-Zeit, wie berechnet durch Messen einer Zeit, die erforderlich ist, bis der Vortex verschwindet, nach Zufügen von 2 g des Superabsorberpolymers zu 50 ml einer physiologischen Salzlösung und dann Rühren desselben bei 600 UpM, 20 Sekunden bis 40 Sekunden ist, und ein Absorptionsvermögen unter Last (5 min Gel-vac-AUL) des Superabsorberpolymers, wie gemessen nach Quellen des Superabsorberpolymers in der physiologischen Salzlösung unter einer Last von 2,068 kPa (0,3 psi) für 5 Minuten und Entfernen restlicher Flüssigkeit unter Vakuum, 19 g/g bis 21 g/g ist.


**Revendications**

1.  Procédé de préparation d'un polymère superabsorbant, le procédé comprenant les étapes consistant à :

    effectuer une polymérisation de réticulation d'un mélange de monomères en présence d'un agent de réticulation interne pour former un gel polymère contenant de l'eau, le mélange de monomères incluant des monomères insaturés à base d'éthylène soluble dans l'eau ayant des groupes acides qui sont au moins partiellement neutralisés, un agent moussant, un tensioactif, un promoteur de mousse et un composé contenant de l'eau qui présente une viscosité comprise entre 2,0 mPa.s (cps) et 5,0 mPa.s (cps) à 25°C quand 1 % en poids de celui-ci est dilué avec de l'eau, mesurée à l'aide d'un viscosimètre BROOKFIELD DV2T à 200 tr/min ;
    sécher, pulvériser et trier par taille le gel polymère contenant de l'eau pour former une poudre polymère de base; et
    en plus, réticuler de surface de la poudre polymère de base en présence d'un agent de réticulation de surface pour former une couche de surface réticulée,
    dans lequel un polysiloxane avec des chaînes latérales de polyéther est utilisé comme tensioactif,
    un sel d'aluminium d'acide inorganique et/ou un sel d'aluminium d'acide organique sont/est utilisé(s) comme promoteur de mousse,
    un alcool polyvinylique, un polyalkylène glycol, un glycérol, ou un mélange de ces derniers est utilisé comme composé contenant de l'eau, et
    le composé contenant de l'eau est utilisé dans une quantité comprise entre 0,1 % en poids et 1 % en poids pour un poids total du mélange de monomères.

2.  Procédé selon la revendication 1, dans lequel un ou plusieurs carbonates sélectionnés dans le groupe constitué de carbonate de magnésium, carbonate de calcium, bicarbonate de sodium, carbonate de sodium, bicarbonate de potassium et carbonate de potassium sont utilisés comme agent moussant.

3.  Procédé selon la revendication 1, dans lequel l'agent moussant est utilisé dans une quantité comprise entre 0,1 % en poids et 1 % en poids pour un poids total du mélange de monomères.

4. Procédé selon la revendication 1, dans lequel le tensioactif est utilisé dans une quantité comprise entre 5 ppm et 80 ppm pour un poids total du mélange de monomères.

5. Procédé selon la revendication 1, dans lequel le promoteur de mousse est utilisé dans une quantité comprise entre 0,1 % en poids et 1 % en poids pour un poids total du mélange de monomères.

6. Procédé selon la revendication 1, dans lequel un ou plusieurs polyols sélectionnés dans le groupe constitué d'éthylène glycol, propylène glycol, 1,4-butanediol, 1,6-hexanediol, 1,2-hexanediol, 1,3-hexanediol, 2-méthyl-1,3-propanediol, 2,5-hexanediol, 2-méthyl-1,3-pentanediol, 2-méthyl-2,4-pentanediol, tripropylène glycol, et glycérol ; ou un ou plusieurs composés à base de carbonate sélectionnés dans le groupe constitué de carbonate d'éthylène et carbonate de propylène sont utilisés comme agent de réticulation de surface.

7. Procédé selon la revendication 1, dans lequel l'agent de réticulation de surface est utilisé dans une quantité comprise entre 0,01 % en poids et 3 % en poids pour un poids total de la poudre polymère de base.

8. Procédé selon la revendication 1, dans lequel la couche de surface réticulée est formée en présence d'un ou plusieurs matériaux inorganiques de silice, argile, alumine, composite de silice-alumine, oxyde de titane, oxyde de zinc et sulfate d'aluminium.

9. Procédé selon la revendication 1, dans lequel la couche de surface réticulée est formée à une température comprise entre 100°C et 250°C.

10. Procédé selon la revendication 1, dans lequel la capacité de rétention centrifuge (CRC) d'une solution saline physiologique, mesurée selon la méthode EDANA WSP 241.2, est comprise entre 29 g/g et 32 g/g, une durée de tourbillon, calculée en mesurant une durée qui était requise jusqu'à ce que le tourbillon disparaisse, après avoir ajouté 2 g du polymère superabsorbant à 50 mL d'une solution saline physiologique, puis en l'agitant à 600 tr/min, est comprise entre 20 secondes et 40 secondes, et un pouvoir absorbant sous charge (5 min gel-vac-AUL) du polymère superabsorbant, mesuré après le gonflement du polymère superabsorbant d'une solution saline physiologique sous une charge de 2,068 kPa (0,3 psi) pendant 5 minutes et l'élimination du liquide résiduel sous vide, est compris entre 19 g/g et 21 g/g.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140312273 A1

- WO 1987003208 A

**Non-patent literature cited in the description**

- **REINHOLD SCHWALM.** UV Coatings: Basics, Recent Developments and New Application. Elsevier, 2007, 115

- **ODIAN.** Principle of Polymerization. Wiley, 1981, 203